(19) Europäisches Patentamt / European Patent Office / Office européen des brevets

(11) **EP 2 978 119 A1**

(12) **EUROPEAN PATENT APPLICATION**

(43) Date of publication:
    **27.01.2016 Bulletin 2016/04**

(51) Int Cl.:
    **H02M 3/335** (2006.01)    **H02M 3/07** (2006.01)
    **H01F 27/38** (2006.01)    **H02M 1/00** (2006.01)

(21) Application number: **14075049.8**

(22) Date of filing: **23.07.2014**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Transon Power Units BV
    6602 DD  Wijchen (NL)**

(72) Inventor: **The designation of the inventor has not
    yet been filed**

(54) **Transformer based switched power converter with switched capacitor auxiliary dc/dc
    converter**

(57)    Transformer based pulse converter with auxiliary switched capacitor dc/dc converter for energy recovery and modified magnetic core structures including magnetically coupled sub-cores with auxiliary secondary windings.

FIG. 8B

EP 2 978 119 A1

FIG.8C

**Description**

FIELD OF THE INVENTION

This invention- the renovation of Patent No. US8,350,654 B2 ; Date of Patent: Jan. 8, 2013 with title : Principles of The Tran-energy machines- relates to the new Tran-principles,-methods for harvesting, regaining, storing and/ or reproducing of the used electric charges, also as:

-   uses high magnetic-permeability, high magnetic saturation materials in core and/or in enameled magnet wires(made of soft magnetic materials or soft magnetic material clad copper wire or multi-strand of copper magnet wires and soft- magnetic-material wires).
-   uses magnetic circuits containing permanent magnet(s), if needed, for more generating electric energy, owing to shifting flow-direction of the magnetic flux from permanent magnet(s), there and back, between main magnetic path and subordinate magnetic path(s) (or sub-magnetic path).
    { Main magnetic path; contains primary-, secondary coil of winding and embedded permanent magnet(s);keeps magnetic flux of permanent magnet(s) flowing, originally, in this path.
    Sub-magnetic path(s) is(are) disconnected with the main magnetic path by air-gaps; keeps magnetic flux of permanent magnet(s) flowing in the sub-magnetic path, when the main magnetic path is occupied by magnetic flux from electric charge, two or more sub-secondary coils of winding are installed on the sub-magnetic path, to generate sub-inductive voltages}.

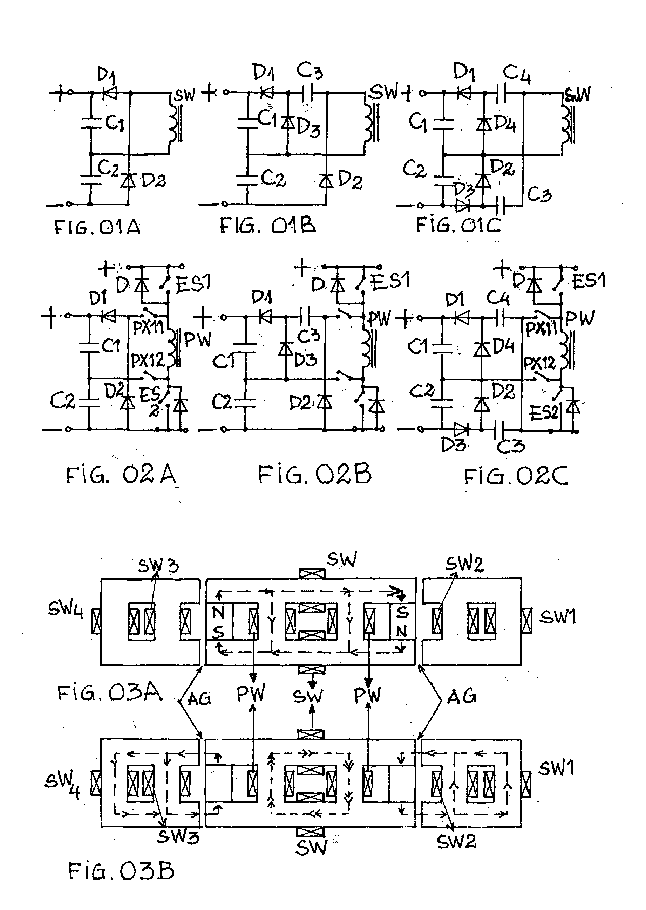

The working of D.C. pulse electric devices is basically, similar to the working of D.C. pulse transformers in sequence or in cascading( wherein electric current is time-varying and never reached its maximal value), but also combined with:
[0003]   - voltage-multipliers, used to replace full-wave bridge rectifiers, is more efficient in reloading the voltage-source, and possibly reducing the turns in coils of winding.(There are different types of voltage-multipliers, namely : The Villard cascade; The Greinarcher voltage multiplier; The Dickson voltage multipliers; The Cockcroft- Walton voltage multiplier; The Bridge circuit or Delon circuit; The Mandal-Sarpeshkar voltage multiplier; The Wu voltage multiplier; The Umeda voltage multiplier; The Nakamoto voltage multiplier; The Bergeret voltage multiplier; ....).
For simplicity, the voltage doublers, in FIG.01A, is for harvesting electric charge from secondary, sub-secondary coils of winding and voltage doublers in FIG. 02A with two special (bidirectional) electronic switches PX 11, PX 12, is for regaining electric energy, when magnetic field of the primary coil of winding is collapsed, and the coming and going of magnetic flux from permanent magnet, embedded in main magnetic path, under effect of time-varying current, that flows in primary coil of winding.(The two special switches PX11, PX12 prevent the undesired flow of current to negative pole of voltage-source.)

-   method, namely: Charge-In-Parallel-Discharge-In-Series,(this method is attended with Voltage-multiplier), all capacitors are in parallel when electric energy, stored in coils of windings, needs low voltage to flow in. When great amount of this electric charge is stored in parallel capacitors, then they all, automatically connected in series. The capacitors now in series, it possesses high voltage in order to reload optional voltage-source. When its voltage is equal with voltage of voltage-source, it becomes automatically capacitors in parallel (low voltage), ready for the next charge;
-   switching techniques, by Programmable Logic Controller or by Computer, in order to set optimally the timing ON/OFF of electronic switches or synchronous diodes, in sequence or at the same time.;
-   synchronous (active) diodes, used in electric circuit or in Voltage-multipliers, such as MOSFETs (Metal Oxide Semiconductor Field Effect Transistors),or IGBTs (Insulated Gate Bipolar Transistors), or GTO ( Gate Turn-Off) Thyristors or GaN (Gallium Nitride) Transistors in order to, first, minimize voltage-drops, ....
-   two special electronic switches, situated between the primary coil of winding and the Voltage-multiplier, with aim to prevent the flows of electric energy, stored in capacitors of the Voltage-multiplier, undesirably reaches first, the negative pole of voltage-source. These two special electronic switches are bidirectional.

DESCRIPTION OF THE RELATED ARTS

The patent literature describes a number of generators and transformers those produce inductive voltages, based on the principle of Faraday's Law. Also battery chargers where, electric energy, supplied in the primary winding, is not often used to charge the battery. Numerous improvements have been attempted to get the efficiency of output power of electric devices higher.
U.S. Pat. No.4,006,401 describes an electromagnetic generator without moving parts, the rate of change of magnetic flux in magnetic core, caused by permanent magnet-source and electric-source, induces voltage.
U.S. Pat. No. 6,362,718 disclosed an electric generator without moving parts, wherein the input coils are alternatively pulsed to provide induced current in the output coils.
Many other patents such as U.S. Pub. No. 2005/0156702; U.S. Pat. No. 6,677,730; U.S. Pat. No. 2010/0264730; U.S. Pub. No. 20060163791; U.S. 20100237873          (PCT/EP2008/007695          or WO2009059657 A3; WO 2012/121683 (PCT/TH2012/000008 ); U.S. 2010-0043641 A1; U.S.2012/0280512 A1; U.S. 2912/0013130 A1; U.S 2012/0074803 A1; show new constructions and aim to get higher efficiency in output power.

However, no integral work has been done in recharging separate voltage-sources, reusing the input energy in cascade installations, together with regaining, harvesting electric energy, stored in the coils of winding(s) in each stage of cascade with identical voltage-source, by means of voltage-multipliers, attended with method : Charge In Parallel, Discharge In Series.

Also as using another soft magnetic materials in wire of secondary coil of winding, in place of only copper wire.

Or when a voltage-source is overloaded, the surplus electric energy can be reproduced to reload, at least, three different voltage-sources.

BACKGROUND ART

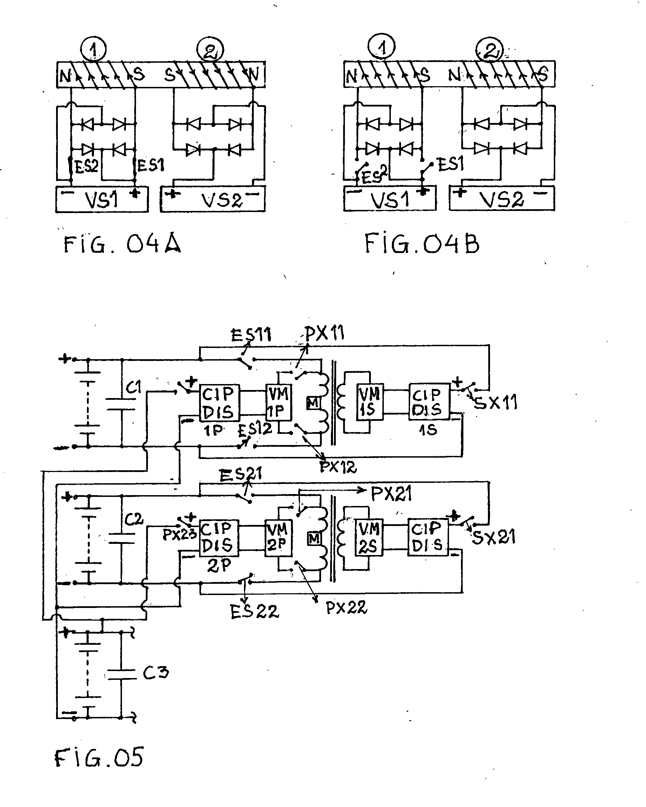

A simple pulsed D.C. transformer, see FIG. 04A and FIG. 04B, with:

- regaining electric energy, when magnetic flux in primary coil of winding is collapsed;
- harvesting electric energy when magnetic flux in secondary coil of winding increases or decreases;
- each of these electric circuits has an own voltage-source for reloading, because of different voltages at each circuit at the same time

When two electronic switches ES1, ES2 are ON, electric current increases in circuit 1.As induction's law of Faraday, a changing magnetic field in circuit 1 induces a voltage in circuit 2. According to Lenz' s law, the two poles are opposite, voltage-source 2 is charged by way of full-wave bridge rectifier, and voltage-source 1 is discharged. Before that current in circuit 1 reaches its maximal value, the two switches ES1, ES2 are OFF, magnetic field in circuit 1 is collapsed" voltage-source 1 is charged through bridge rectifier, voltage-source 2 is once more, charged .Note that only electric charges with voltage higher than voltage of voltage-source can load the voltage-sources, the rest is turned into warmth. (Voltage-multipliers are installed in the following electric devices, attended with method : Charge In Parallel; Discharge In Series in order to make electric charge back to voltage-sources more efficiently. Method of Charge In Parallel; Discharge In Series (CIP, DIS) can also be repeated, to the benefits of regenerating the used electric charge. But in most cases, Parallel capacitors should be reloaded to a certain voltage, before automatically turning into a capacitor in Series to fulfill the desired work).

Energy of electric charge, flowing through an external electric/magnetic circuit can be calculated by :

$$W = Q \times \Delta V$$

where :

W is energy (attainably) in Joules ; Q is electric charge in Coulombs, a product of current and time-duration. (Note that electric current is time-varying and never reached its maximal value); $\Delta V$ is operational voltage of each battery.

When the same electric charge, with equal operation-voltage, flowing from high to low voltage, through external circuit of identical inductor in identical voltage-source, shall yield the same electric energy. In fact, it isn't the case, because of the internal resistance of each of battery, but charge is remained in identical voltage-source of lower stage;

By replacing diodes with synchronous diodes, such as MOSFETs (Metal Oxide Semiconductor Field Effect Transistors, IGBTs (Insulated Gate Bipolar Transistors), GaN (Gallium Nitride) Transistors, GTO (Gate Turn-Off) Thyristor, ... , the voltage drops across these electronic components are minimized. Therefore, more electric energy can be saved;

By replacing full-wave bridge rectifiers with voltage-multipliers, more electric energy shall be used to recharge the desired voltage-source in cascade;

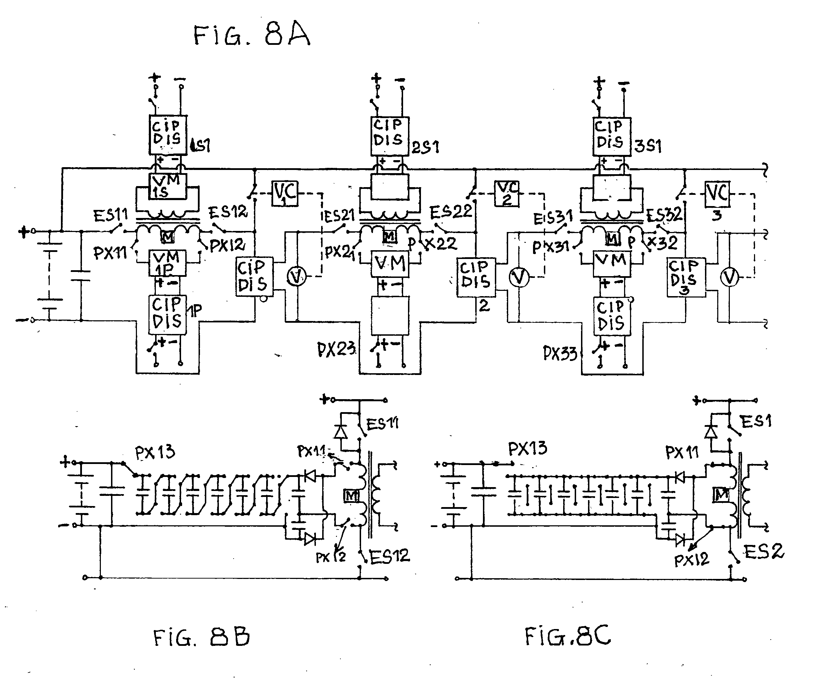

Special reusing the supplied electric charge is shown in FIG. 08 B and FIG. 08C , namely Charge In Parallel; Discharge In Series When switches ES 21 and ES 22 are ON, a flow of electric charge from the voltage-source, after producing the desired work, will reach the positive poles of a plurality of capacitors C n (n can be 1, 2, 3, ...), connected in parallel, negative pole of this voltage-source is connected with the negative poles of these capacitors. When voltage of these capacitors reach the desired value, these capacitors shall be disconnected with the winding and automatically connected again in series. They become the capacitor with high voltage, is ready to charge any voltage-source in cascading. At mean time, if needed, another reserved capacitors, connected in parallel, shall take place of the former capacitor. This manipulation can be done automatically.

SUMMARY OF THE INVENTION

The present invention, based on principles of :

1- Applying a time-varying current in primary winding.
2- Regaining electric energy, when magnetic field in primary winding is collapsed.
3- Harvesting electric energy from the secondary winding of main magnetic path, also as sub-secondary windings of sub-magnetic path, in case of a magnetic circuit containing permanent magnet(s).

4- Reusing the applied electric charge in primary winding.

5- Applications of soft magnetic materials (high relative magnetic permeability, high magnetic saturation, ...) not only in core , but also in magnetic wires for secondary coils of winding and for secondary printed circuit windings, or for planar D.C. pulse transformer(with embedded permanent magnet(s)) or coreless D.C. pulse transformer with printed circuit winding.

6- New forms of magnetic circuit containing permanent magnets, whereby just one electric pulse applied in primary winding, many magnetic fields of permanent magnets spring back and forth between main magnetic path and sub-magnetic path.

7- AC / DC Converters

Applying the time-varying current from a DC voltage-source to the primary winding of a D.C. pulse transformer without or with embedded permanent magnet(s), the best moment to cease the time-varying current is when the rate of change of current just passes its greatest value;

There are two methods for applying the time-varying current:

1- In sequence,(see also in FIG. 05) each pulse completes its cycle ON/OFF. The OFF-time is long enough for reloading optional voltage-sources with electric energy from increasing, decreasing and collapsed magnetic flux in windings.

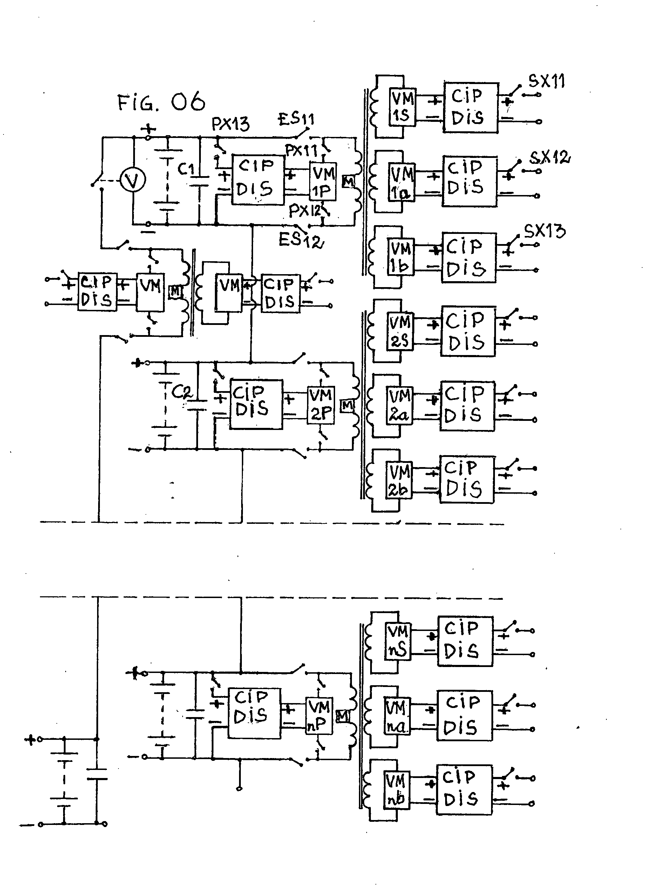

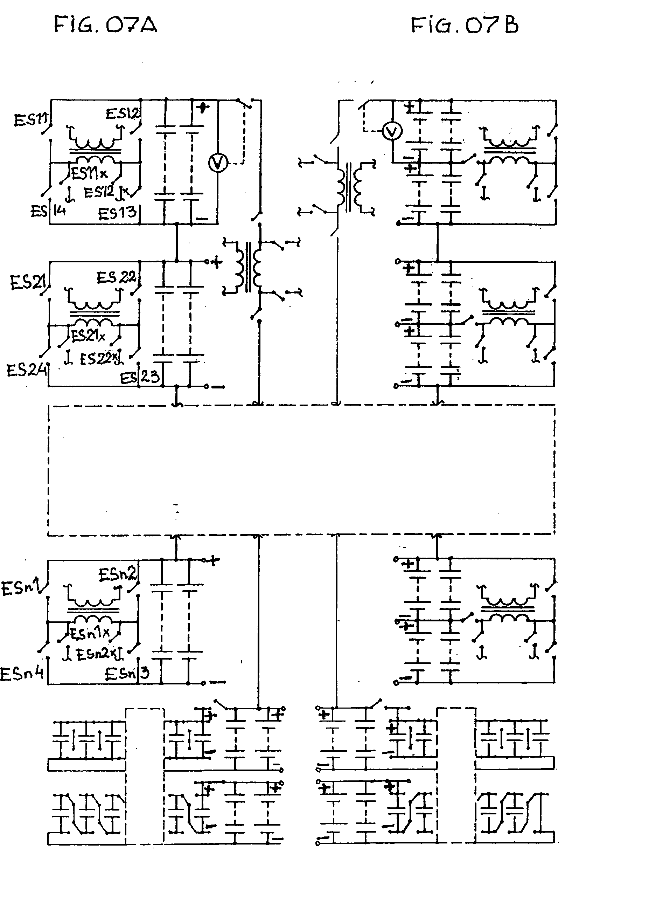

2- In cascade,(see also in FIG. 06 and FIG. 07A , FIG. 07B) electric charge from the voltage-source of first stage in cascade, flows through primary winding of a D.C. pulse transformer - without or with embedded permanent magnet(s) - into the second voltage-source, and so on.

(D.C. pulse transformers should be identical for easy manufacturing and voltage-sources are identical for easy controlling. The voltage of voltage-source is not changed, during the time of charge or discharge). When great amount of electric energy, stored in coils of primary, secondary and/or sub-secondary windings is restored in an optional voltage-source, then this inductor can be in operation again, Otherwise, the windings become warm, low capacitance capacitors can be exploded.

Reusing the applied energy of charge, electric charge is product of the time-varying current of input power, multiplied with duration of time wherein the time-varying current is applied. There are five methods for reusing the applied electric charge on inductor in cascade circuits, namely:

1- See FIG. 06 The first method :

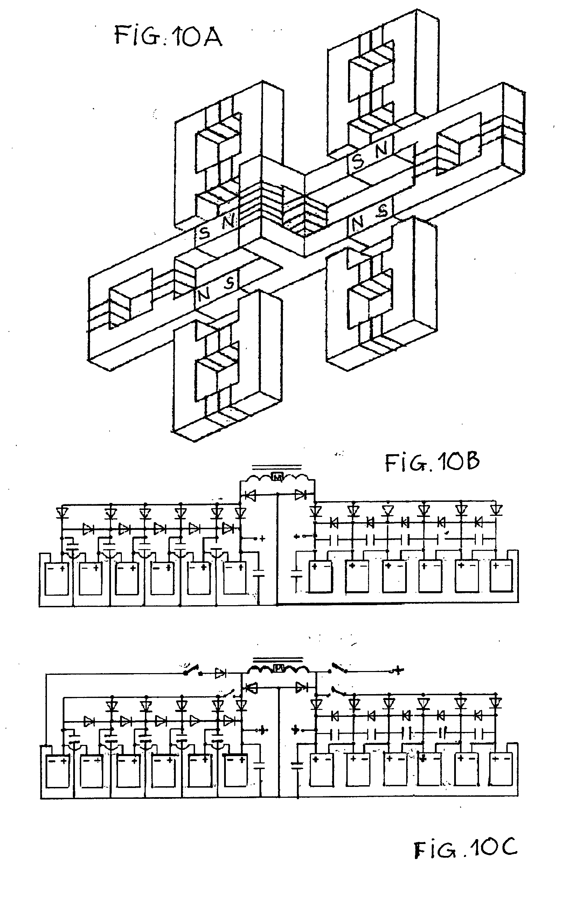

All identical voltage-source are connected in series, each external circuit of each voltage-source is a D.C. pulse transformer with an embedded, high-energy permanent magnet. Electric charge flows from the first-stage voltage-source, through external primary winding of a D.C. pulse transformer, into the positive pole of the second voltage-source. Because operation of D.C. pulse transformer is the same, therefore, explanations are only for the circuit in first stage of cascade. When switches ES 11, ES 12 are ON - {(Switches PX 11, PX 12 of Voltage-multiplier VM1 P, are OFF, they are bidirectional and prevent undesired flow of current in this circuit), switch PX 13 is a synchronous diode and prevents current from voltage-source flowing back to capacitors in parallel, situated in component CIPDIS 1P(Charge In Parallel; Discharge In Series) and in Voltage-multiplier VM 1 P. Switches SX 11, SX 12, SX 13 of all CIPDIS on secondary and sub-secondary electric circuits are also synchronous diodes, for preventing current from voltage-source flowing back to the in-parallel capacitors of CIPDIS } - the time-varying current induces inductive voltages in a secondary coils of winding on main magnetic path and in two sub-secondary coils of winding on the sub-magnetic path,(see also in FIG. 10A , magnetic circuit with one embedded permanent magnet). When switches ES 11, ES 12 are OFF, switches PX 11 , PX 12 in this stage are ON, electric energy from the primary winding, and later energy from magnetic flux of embedded permanent magnet, via Voltage-multiplier VM 1P, CIPDIS 1P and synchronous diode PX 13 recharge the voltage-source.

At secondary, sub-secondary windings, inductive voltages recharge optional voltage-source through Voltage-multiplier with attended CIPDIS

After that, they all are OFF again, all capacitors in CIPDIS are in parallel, waiting for repetitive operation.

2- The second method of reusing the applied electric charge. See FIG. 08A.

Electric charge from the first voltage-source, flows through a primary winding, into the in-parallel capacitors of CIPDIS 1.

In order to fulfill the same work as in first stage, the in-parallel capacitors in CIPDIS 1 P are recharged to the optimal voltage through voltage-controller VC 1, and so on ....

3- The third method of reusing the applied electric charge.

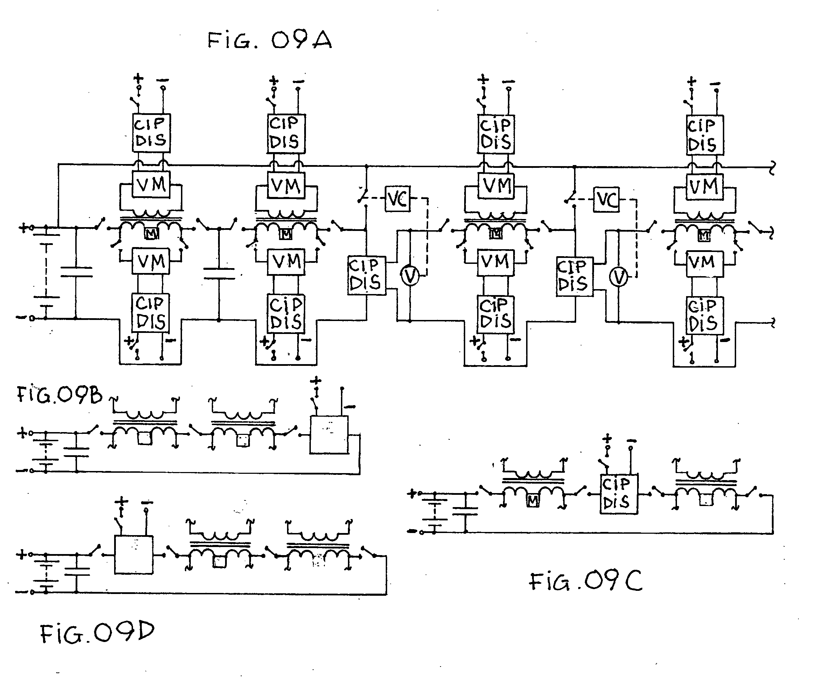

See FIG. 09A , Electric charge of high-voltage from the first voltage-source, flows through primary winding into the high-capacitance capacitor until the desired voltage and fulfill the desired work in first stage. Charge in this capacitor flows through the primary winding of second stage into the in parallel capacitors in CIPDIS 2.

Voltage of these in-parallel capacitors is recharged until the optimal voltage, in order to fulfill the same work as done in previous stage, and so on, ....

4- The fourth method of reusing the applied electric charge. See FIG. 09B ; FIG. 09C ; FIG. 09D

The component CIPDIS can be installed behind, before or in the middle of two or more identical primary- windings. If the component CIPDIS 1 is installed behind the two in-series primary windings (FIG. 09B), electric charge from the voltage-source of first stage, flows into the in-parallel capacitors of the component CIPDIS 1, through the two in-series primary windings. Voltage of in-parallel capacitors of CIPDIS 1 should be recharged until the optimal level, in order to fulfill the same work as done in the previous stage.

(Note that if the differences between two or more primary windings are considerably, when electric charge is applied to them, some of them seem to be inertial).

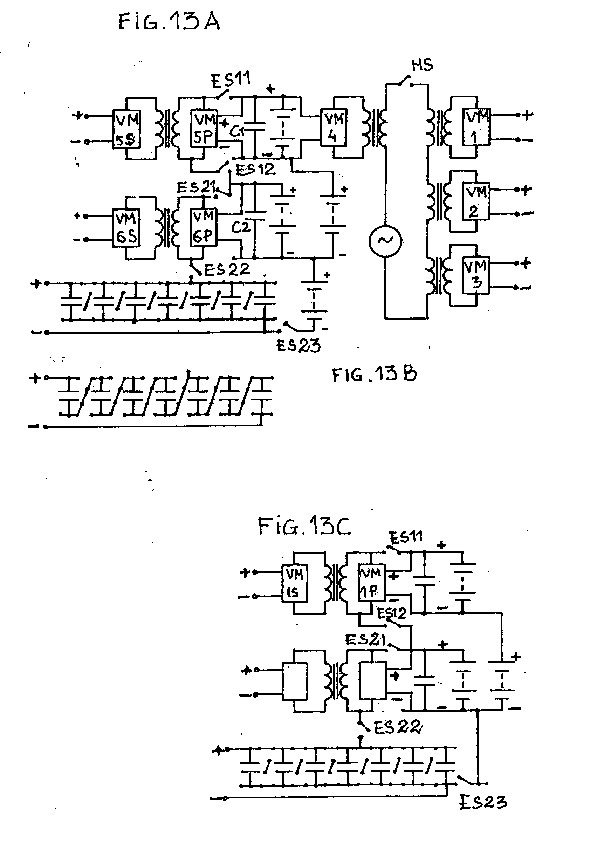

5- The fifth method of reusing the applied electric charge. See FIG. 13A

From the second stage of cascade circuit, there are two voltage-sources in parallel, one voltage source is connected in series with voltage-source of the previous stage, the other is free in respect of the previous voltage-source. Flow of electric charge, from the previous voltage-source comes into the positive pole of the next voltage-source, and so on, ....

Regaining electric energy , when the magnetic field in primary winding is collapsed, there are two ways for regaining electric energy in winding of D.C. pulse transformer containing permanent magnet(s)-1- By way of separate voltage-source for each half cycle, combined with power cell batteries and extra electronic switch ES 3A / ES 3B , ( seeFIG. 10B / C).Electronic switches ES 3A / ES 3B are ON in order to let electric charge with low voltage coming into the separate cells of suitable voltages.ES 3A and ES 3B have to be OFF before the time that ES 1 and ES 2 are ON. For secondary coil of winding, see FIG. trang X14, the circuit is simpler, electric charge seeks itself the power cell battery with suitable voltage to flow in. The next way is more efficient

2- By ways of voltage-multiplier, attended with method Charge In Parallel, Discharge In Series, a considerable electric energy can be regained to reload the optional voltage-source.(see FIG. 07A / B ; FIG. 08B/C , FIG. 12A / B , FIG. 13B / C

Harvestings electric energy in secondary and sub-secondary coils of winding, by means of voltage-multipliers, attended with CIPDIS, -when the magnetic field in the secondary, sub-secondary coils of winding is increasing or decreasing - are highly efficient

Harvesting electric energy in the secondary coil of winding should be restored at voltage-source of highest stage of the cascade, owing to the property of isolated secondary, sub-secondary coils of winding.

Electric charge of over-voltage from voltage-source in highest stage can be used to charge, at least, three voltage-sources at the same time. Namely , the voltage-source for non-inductive loads(the lowest stage in cascade circuit) with transient electric charge, from the overvoltage of highest-stage voltage-source. With regaining electric energy from the primary coil of winding and with harvesting electric energy from secondary, sub-secondary windings.(See FIG.trang X2 and trang X3)

FIG. 07A , FIG. 07B show the D.C. pulse transformers without permanent magnet in cascade. In this figure, voltage-multiplier and Charge In Parallel, Discharge In Series symbols are omitted to make places for H-bridge circuit (with four electronic switches) or Y-bridge with three electronic switches, as seen in FIG. 07B to change directions of magnetic flux in primary coil of winding, one of aims of these circuits is being able to install voltage-multiplier and attended CIPDIS at the primary winding. Fig.trangX8G shows via a voltage-multiplier, attended with Discharge In Series electric charge is in reloading the battery, that supplies electric charge to a H-bridge circuit of D.C. pulse transformer.

Method of Charge In Parallel, Discharge In Series (CIPDIS) see FIG. 07A / B ; FIG. 08B / C ; FIG. 11E / F / G ; FIG. 12A / B ; FIG. 13 B / C) is also used in end phase of cascade. Electric charge flows into the in-parallel capacitors of low voltage, With switching technique, all capacitors are connected again in series,

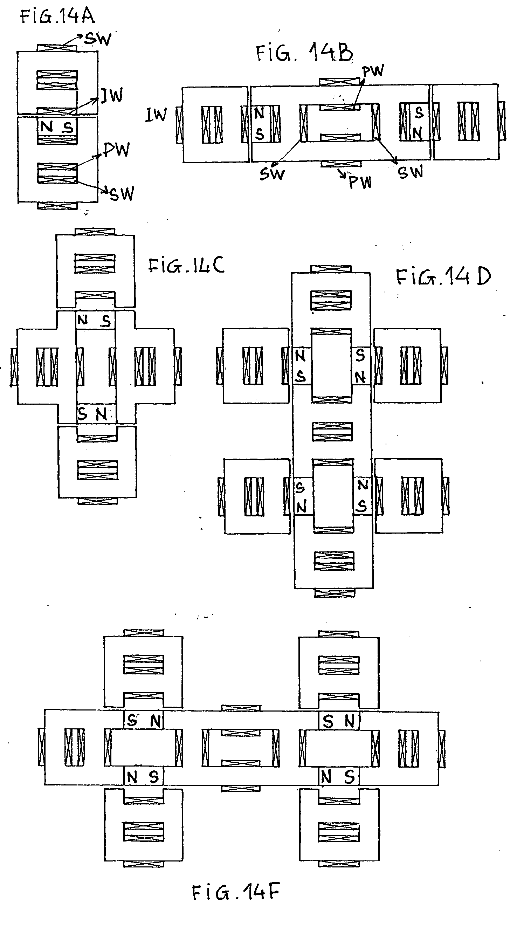

There are various forms of D.C. pulse transformers with embedded permanent magnet(s). In FIG. 14A/B/C/D/E;

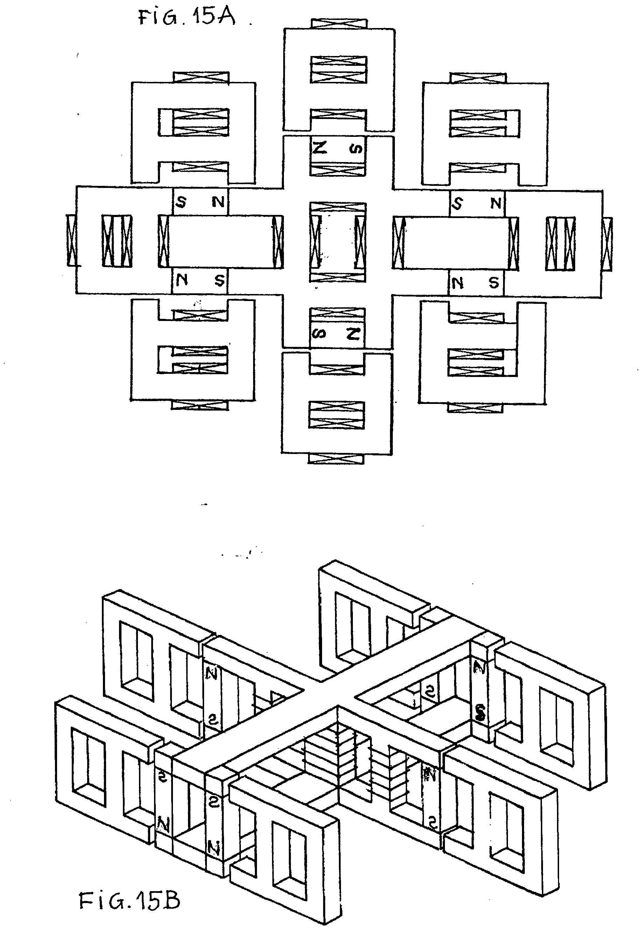

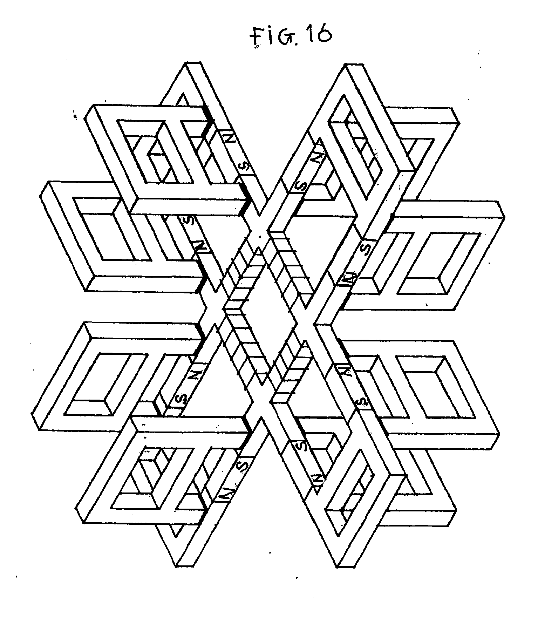

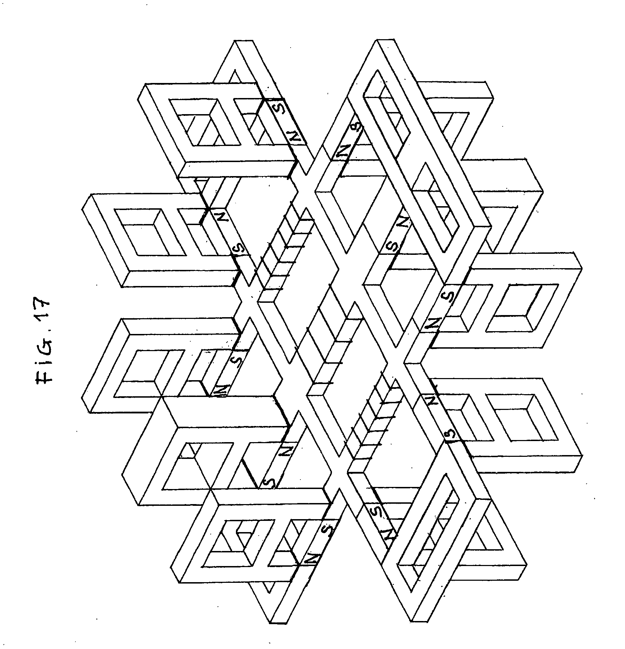

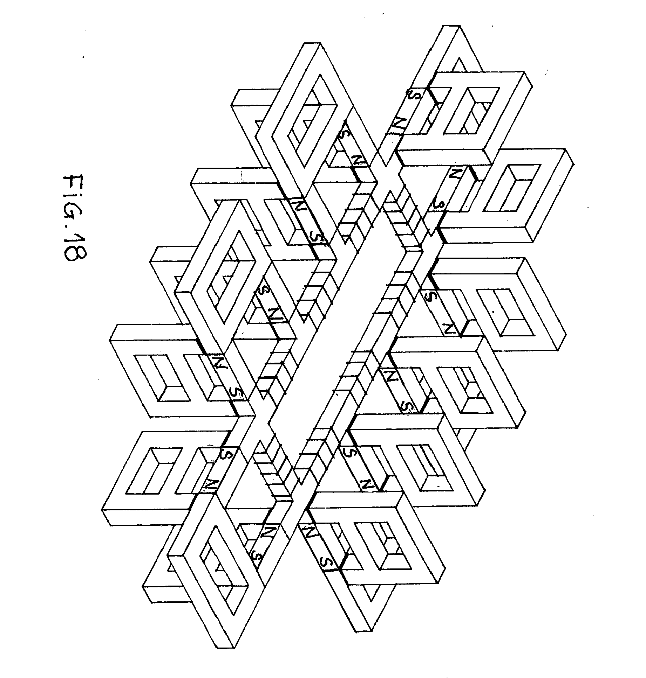

FIG. 15A / B ; FIG. 16 ; FIG. 17 and FIG. 18 is to see, just with one electric pulse from voltage-source, the more embedded permanent magnets in magnetic circuit, the more sub-secondary coils of windings men can make to harvest sub-inductive voltages.

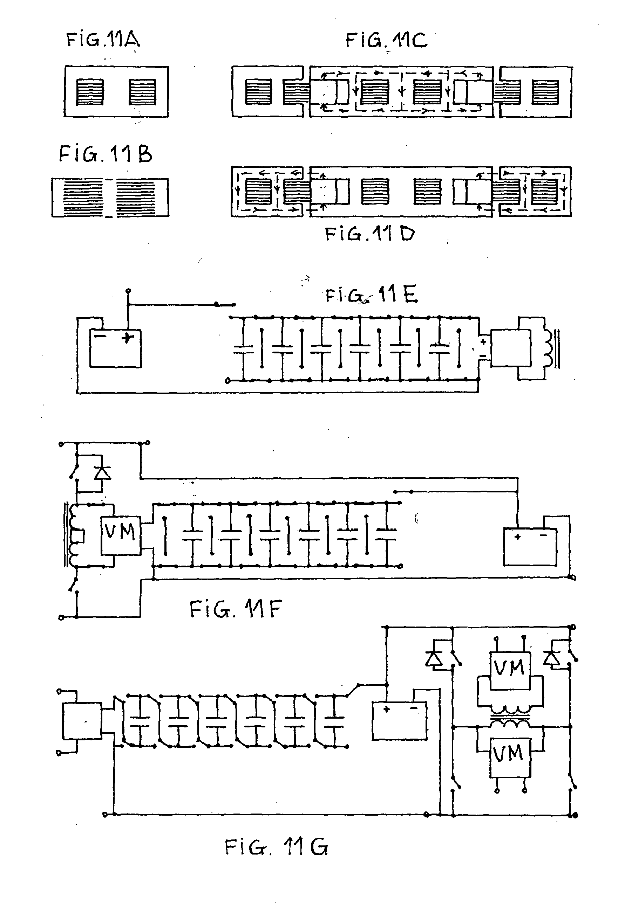

Using voltage multiplier, attended with method Charge In Parallel, Discharge In Series is also applied in planar D.C. pulse transformer, with permanent magnet(s) and with Printed Circuit Winding.(See FIG. 11A/B/C/D).

For planar D.C. pulse transformer without permanent magnet and coreless printed circuit winding, in order to be able using the voltage-multiplier, attended with CIPDIS, the electric circuit of supplied electric charge are H-bridge or Y-bridge. (see FIG. 07A / B).

All copper magnetic wires in secondary, sub-secondary windings and also in printed circuit windings, can be replaced with magnetic wires, those are made of soft magnetic materials or with soft magnetic material clad copper wire or with multi-strand magnetic wires, combined of soft magnetic and copper strands, to reduce the electric resistance. High relative permeability of soft magnetic materials and high magnetic saturation property make advantages in generating inductive voltage.

DESCRIPTION OF THE DRAWINGS

FIG. 01A; FIG. 01B and FIG. 01C show voltage-doubler, voltage-tripler, voltage-quadrupler, respectively, for the secondary, sub-secondary coils of winding. FIG. 02A; FIG. 02B and FIG. 02C show voltage-doubler, voltage tripler, voltage-quadrupler, respectively. The differences between them are the two bidirectional electronic switches. They prevent electric current, when electronic switches ES 1 , ES 2 are ON, flowing into negative pole of voltage-source. FIG. 03A shows a magnetic circuit, with two embedded, high-energy permanent magnets in the main magnetic path, there are primary coil PW and secondary coil of winding SW, wrapped around on the main magnetic path. On the sub-magnetic path, separated with main magnetic path by two air-gaps, there are four sub-secondary coils of winding, from SW1 to SW4. Magnetic path is made of soft magnetic material with high relative permeability and high magnetic saturation. At begin, a constant magnetic flux of permanent magnets flows in main magnetic path, there is no voltage at any coil of winding.

When a time-varying current is applied in primary coil of winding, changing magnetic field of the primary winding, induces an inductive voltage in secondary winding and shift magnetic flux of permanent magnets into the sub-magnetic path.(Owing to high relative permeability and high magnetic saturation of this soft magnetic material ).

When the time-varying current is ceased, decreasing magnetic flux induces inductive voltages again in secondary and primary coil of winding. Magnetic flux of permanent magnets springs to and fro between main- and sub-magnetic path, cause sub-inductive voltages in all coils of winding.

FIG. 04A and FIG. 04B shows basic principles of D.C. pulse transformer with regaining electric energy, that is supplied to the primary coil of winding when two electronic switches ES 1, ES 2 are ON. Effect from the rate of change of current in circuit 1 induces an inductive voltage in circuit 2, magnetic flux of circuit 2 is coped with direction of magnetic flux of circuit 1 (Lenz's law) and voltage-source VS 2 is charged via a full-wave bridge rectifier.

Before that current in circuit 1 reaches the maximal value, switches ES 1, ES 2 are OFF, (see FIG. 04B), collapsed magnetic field in circuit 1 induces a current that via bridge rectifier, voltage-source VS 1 is charged. At the same time, in circuit 2, direction of magnetic flux is changed, but via bridge rectifier, voltage-source VS 2 is charged again. It is known that only electric charges with voltage higher than voltage of voltage-source, can charged the voltage-source, electric charges with low voltage shall be turned into warmth. (One of main reasons for application of voltage-multiplier and attended with method Charge In Parallel, Discharge In Series , abbreviation : CIPDIS). And voltage-sources are independent with each other during the time that they are charged by different voltages.

FIG. 05 shows simple circuits of two D.C. pulse transformers with embedded permanent magnet, they are not connected in cascade and operate in sequence. Primary and secondary windings are installed with Voltage-multipliers, attended with Charge In Parallel, Discharge In Series (CIPDIS). Harvesting electric energy is used to reload its own voltage-source. Regaining electric energy from primary winding is used to charge an optional voltage-source.

Between voltage-source and CIPDIS there is a synchronous diode PX 13. It is for preventing flow of current from voltage-source back to in-parallel capacitors of CIPDIS,- at this moment, voltage of CIPDIS is equal with voltage of Voltage-multiplier VM.1 P -, Two bidirectional switches, PX 11 , PX 12,- situated between voltage multiplier and primary winding-, are ON when two switches ES 11 , ES 12 are OFF). These two special switches (or bidirectional synchronous diodes)are also used to prevent the undesired flow of current from voltage-source when two electronic switches ES 11, ES 12 are ON.

At secondary winding (and sub-secondary winding, not drawn here), inductive current, via voltage-multiplier VM 1S , CIPDIS 1S and synchronous diode SX 11 flows into voltage-source.

- The first method of reusing the applied electric charge is shown in FIG. 06. It is a cascade circuit of D.C pulse transformer with one embedded, high-energy, permanent magnet.(see also in FIG. 10A a simple drawing of magnetic circuit, containing one permanent magnet in main magnetic path. On this main magnetic path, there are primary winding and secondary winding. On the sub-magnetic path, there are two sub-secondary windings). All windings are installed correctly to make sure that there is no undesired flow of current in this circuit. Electric charge flows from voltage-source of the first stage, through primary winding, into the positive pole of the second voltage-source.

The done works of this electric charge are :

1- Building up a changing magnetic field in the main magnetic path.
2- Making an inductive current in secondary winding to charge an optional voltage-source through Voltage-multiplier, CIPDIS and synchronous diode.
3- Shifting flow of magnetic flux of permanent magnet from main magnetic path into sub-magnetic path (magnetic path with two airgaps). Therefore, sub-inductive currents, coming from two sub-secondary windings, through Voltage-multipliers, CIPDIS's and synchronous diodes to charge the other optional voltage-sources.
4- Collapsing magnetic field in the main magnetic path, generates an inductive current, through primary winding, voltage-multiplier, CIPDIS and synchronous diode to charge its own voltage-source.

5- Making an inductive current, (but reverse direction) in secondary winding to charge the optional voltage-source.

6- Increasing magnetic flux in main magnetic path, decreasing magnetic flux in sub-magnetic path, this is one of properties of magnetic flux of permanent magnet, embedded in magnetic circuit of soft magnetic material of high relative permeability, high magnetic saturation. Therefore, inductive currents appear in all of four windings

In this method, the same electric charge flows sequentially from the first stage to the second, ... and to the last stage. At this last stage, the electric charge could be reused for reproducing by way of Charge In Parallel, Discharge In Series (CIPDIS)

Electric charge with over-voltage of the first stage, flows into the voltage-source of the last stage through a system as in each stage.

(See in this figure (06) and FIG. 07A / B, for an electric circuit of electric charge with over-voltage. At least three voltage-sources can be reloaded .

(Blanc area on the drawing means a repeating of the same operation. Two small area's, with switches, restricted with dot-line means H-bridge switching or Y-bridge switching.)

FIG. 07A , FIG. 07B show pulsed D.C. transformers , with a H-bridge or with Y-bridge for primary winding, in this case, this is a way to apply voltage-doubler and attended CIPDIS. At last stage of the cascade circuit, method CIPDIS is still be used to charge voltage-source.

FIG. 8A shows the second method of reusing the applied electric charge.

In first stage, an electric charge from voltage-source through primary winding of a D.C. pulse transformer flows into the in-parallel capacitors of a CIPDIS , in order to fulfill the same work of the first stage, all capacitors in parallel need to be recharge until a desired voltage, then with switching technique, in-parallel capacitors are turned into series, this is repeated from stage to stage.

FIG. 8B shows the CIPDIS with all capacitors in series to charge a voltage source. It is quite disconnected with the D.C. pulse transformer. When the charging is fulfilled, all capacitors , are in parallel, (see FIG. 8C) voltage of them is low enough for the next charge, With this method electric charge flows from one stage to the next stage.

FIG. 09A shows the third method of reusing the applied electric charge; This method is a little different with the second method.

It is begun with a high-volt, high capacitance voltage-source, electric charge flows from this , through primary winding into a capacitor. The charge in the capacitor is great enough to fulfill a work in its circuit and flows into a new CIPDIS of next stage. From now the operation is repeated as in second method.

FIG. 9B / C / D shows a new way in production, two or more identical are in operation at the same time. A suitable electric charge , from voltage source flows through a plurality of primary windings into a CIPDIS. The CIPDIS can located at different positions in the electric circuit.

The last method of reusing the applied electric charge is drawn in FIG. 13C. and in FIG.13A. All voltage-sources are also connected in series, but from the second stage, there are two voltage-sources are connected in parallel, With this connection, flowing of electric charge from one stage to the next stage can be measured.

FIG. 13A and FIG. 13C, the last stage is ended with Charge in Parallel.

FIG. 13B shows a situation of Discharge In Series.

FIG. 11A symbolizes a planar transformer with printed circuit windings, wherein the secondary winding can be made of copper or soft magnetic material or soft magnetic material clad copper wire or multi-strand of soft magnetic wires and copper wires. High relative permeability of soft magnetic wire can compensate the high electric resistance of these wires.

FIG. 11C / D show planar D.C. pulse transformer with embedded permanent magnet and printed circuit windings.

FIG. 11E shows Charge In Parallel of a (sub) secondary winding.

FIG. 11F shows Charge In Parallel of a primary winding with embedded permanent magnet.

FIG. 11F shows the situation of Discharge In Series.

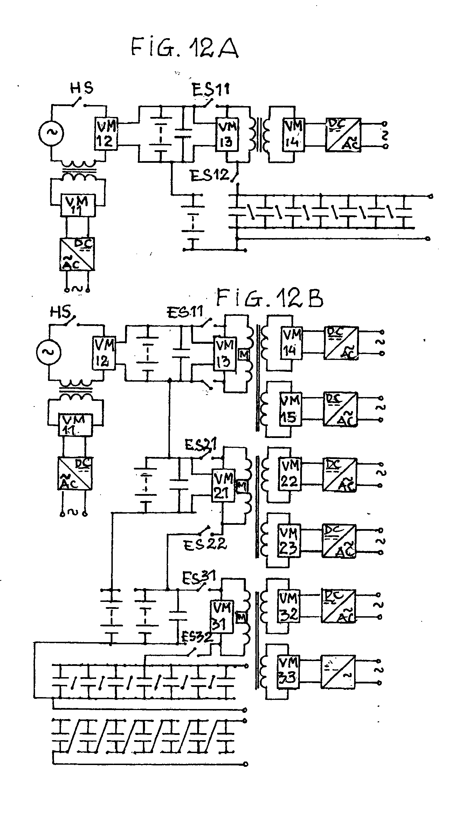

FIG. 12A / B and FIG. 13A show the combinations of AC/DC converters with Voltage-multiplier and CIPDIS.

From FIG. 14 to FIG. 18 show different forms of D.C. pulse transformer with embedded permanent magnet(s).Just one electric pulse applied in primary winding, there are more sub-inductive voltages (not drawn here) appear.

The invention claimed is :

**Claims**

1. A new method for regaining electric energy from collapsed magnetic field in the primary winding by way of a combination of voltage-multiplier and method : Charge IN Parallel, Discharge In Series.

2. A new method for harvesting electric energy through secondary winding and sub-secondary windings by way of combination of voltage-multiplier and method : Charge In Parallel, Discharge In Series, when magnetic flux flowing through these windings in increasing or in decreasing.

3. Five methods for reusing the used electric charge.(described in text of the application).

4. New forms of magnetic cores, with permanent magnets, namely the main magnetic core, containing primary , secondary windings and one or more permanent magnets; and the sub-magnetic core with two air-gaps, separated from the main magnetic cores, containing sub-secondary windings.

5. New different forms for D.C. pulse transformers whereby, just using one electric pulse, then directions of all magnetic flux of permanent magnets , embedded in different circuits, related with magnetic flux from the electric pulse are changed. Originally, magnetic flux of permanent magnet flows in main magnetic path, during the short time of applying electric charge in the primary winding, magnetic flux from permanent magnet have to flow in the sub-magnetic path. Therefore more benefits in generating electric energy.

6. New magnetic wires, made of soft magnetic material clad copper wire or multi-strand magnetic wires, a combination of soft magnetic wires and copper wires.

7. New printed circuit winding, made of wire in claim 6.

8. New coreless D.C. pulse transformers with inductive voltage from claim 7.

9. New planar D.C. pulse transformer with inductive voltage from claim

10. New AC/DC converters by combinations of electric pulse, voltage-multiplier and method Charge In Parallel, Discharge In Series.

11. For electric charge, method Charge In Parallel, Discharge in Serie can be repeated many times to produce benefit works.

12. Applications of methods for reusing the used electric charges together with voltage-multiplier and Charge In Parallel, Discharge in Series, make new electric devices.

FIG. 01A    FIG. 01B    FIG. 01C

FIG. 02A    FIG. 02B    FIG. 02C

FIG. 03A

FIG. 03B

FIG. 04A

FIG.04B

FIG.05

FIG. 06

FIG. 07A            FIG. 07B

FIG. 8A

FIG. 8B

FIG. 8C

FiG. 09A

FiG. 09B

FiG. 09C

FiG. 09D

FiG.10A

FiG.10B

FiG.10C

FIG.11A

FIG.11C

FIG.11B

FIG.11D

FIG.11E

FIG.11F

VM

FIG.11G

VM

VM

FIG. 12 A

FIG. 12 B

FiG.13A

FIG.13B

FiG.13C

FIG.14A

FIG. 14B

FIG.14C

FIG.14D

FIG.14F

FIG.15A

FIG.15B

FIG. 16

FIG. 17

FIG.18

Europäisches
Patentamt

European
Patent Office

Office européen
des brevets

# EUROPEAN SEARCH REPORT

Application Number

EP 14 07 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/112877 A1 (TRANICO B V [NL]; TRAN CONG TOAN [NL]) 17 September 2009 (2009-09-17) | 1-3, 10-12 | INV.<br>H02M3/335<br>H02M3/07 |
| A | * figures 6a-6f *<br>* page 9, line 25 - page 11, line 9 * | 5,7,9 | ADD.<br>H01F27/38 |
| A | US 6 304 007 B1 (YU HO-YUAN [US]) 16 October 2001 (2001-10-16) * figure 2 * | 1-3, 10-12 | H02M1/00 |
| A | US 2003/058666 A1 (MYONO TAKAO [JP]) 27 March 2003 (2003-03-27) * figures 9,10 * | 1-3, 10-12 | |
| A | US 2005/213267 A1 (AZRAI FIRAS [US] ET AL) 29 September 2005 (2005-09-29) * figure 15 * * paragraph [0095] * | 1-3, 10-12 | |
| A | EP 2 528 185 A2 (SAMSUNG ELECTRONICS CO LTD [KR]) 28 November 2012 (2012-11-28) * figures 3,4 * | 1-3, 10-12 | TECHNICAL FIELDS SEARCHED (IPC) |
| X | WO 2012/126993 A2 (AKAD GORNICZO HUTNICZA [PL]; WOREK CEZARY [PL]; LIGENZA SLAWOMIR [PL]) 27 September 2012 (2012-09-27) * figures 5,6 * | 4,5 | H01F<br>H02M |

-/--

The present search report has been drawn up for all claims

| Place of search | Date of completion of the search | Examiner |
|---|---|---|
| The Hague | 15 January 2015 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

**Application Number**

EP 14 07 5049

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANTONOV A ET AL: "Magnetization reversal process and nonlinear magneto-impedance in Cu/NiFe and Nb/NiFe composite wires", JOURNAL OF MAGNETISM AND MAGNETIC MATERIALS, ELSEVIER SCIENCE PUBLISHERS, AMSTERDAM, NL, vol. 249, no. 1-2, 1 August 2002 (2002-08-01), pages 315-318, XP027322710, ISSN: 0304-8853 [retrieved on 2002-08-01] * I. Introduction * | 6-9 | |
| A | EP 2 290 799 A1 (CONVERTEAM TECHNOLOGY LTD [GB]) 2 March 2011 (2011-03-02) * figures 1a, 1b, 5, 7 * | 10 | |

TECHNICAL FIELDS
SEARCHED      (IPC)

The present search report has been drawn up for all claims

| Place of search | Date of completion of the search | Examiner |
|---|---|---|
| The Hague | 15 January 2015 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

Europäisches
Patentamt

European
Patent Office

Office européen
des brevets

Application Number

EP 14 07 5049

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 07 5049

The Search Division considers that the present European patent application does not comply with the
requirements of unity of invention and relates to several inventions or groups of inventions, namely:

    1. claims: 1-12

        Electric power conversion

   1.1. claims: 1-3, 10-12

        Switched capacitor auxiliary dc/dc converter

   1.2. claims: 4, 5

        Magnetic cores for pulse transformers

   1.3. claims: 6-9

        Composite wire and applications thereof
                 ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 14 07 5049

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2015

| Patent document cited in search report | | Publication date | Patent family member(s) | | Publication date |
|---|---|---|---|---|---|
| WO 2009112877 | A1 | 17-09-2009 | US<br>WO | 2010264730 A1<br>2009112877 A1 | 21-10-2010<br>17-09-2009 |
| US 6304007 | B1 | 16-10-2001 | NONE | | |
| US 2003058666 | A1 | 27-03-2003 | CN<br>JP<br>JP<br>KR<br>TW<br>US | 1409472 A<br>3557186 B2<br>2003111385 A<br>20030027729 A<br>578358 B<br>2003058666 A1 | 09-04-2003<br>25-08-2004<br>11-04-2003<br>07-04-2003<br>01-03-2004<br>27-03-2003 |
| US 2005213267 | A1 | 29-09-2005 | US<br>WO | 2005213267 A1<br>2005094523 A2 | 29-09-2005<br>13-10-2005 |
| EP 2528185 | A2 | 28-11-2012 | CN<br>EP<br>JP<br>KR<br>US | 102801218 A<br>2528185 A2<br>2012249511 A<br>20120131973 A<br>2012299557 A1 | 28-11-2012<br>28-11-2012<br>13-12-2012<br>05-12-2012<br>29-11-2012 |
| WO 2012126993 | A2 | 27-09-2012 | CA<br>CN<br>EP<br>US<br>WO | 2829807 A1<br>103635979 A<br>2689433 A2<br>2014043127 A1<br>2012126993 A2 | 27-09-2012<br>12-03-2014<br>29-01-2014<br>13-02-2014<br>27-09-2012 |
| EP 2290799 | A1 | 02-03-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8350654 B2
- US 4006401 A
- US 6362718 B
- US 20050156702 A
- US 6677730 B
- US 20100264730 A
- US 20060163791 A
- US 20100237873 A
- EP 2008007695 W
- WO 2009059657 A3
- WO 2012121683 A
- TH 2012000008 W
- US 20100043641 A1
- US 20120280512 A1
- US 29120013130 A1
- US 20120074803 A1